**Europäisches Patentamt**

**European Patent Office**

**Office européen des brevets**

(19)

(11) Veröffentlichungsnummer: **0 212 198**
**B1**

# EUROPÄISCHE PATENTSCHRIFT

(12)

(45) Veröffentlichungstag der Patentschrift:
31.05.89

(51) Int. Cl.⁴: **B 23 B 31/16**

(21) Anmeldenummer: **86109318.5**

(22) Anmeldetag: **08.07.86**

(54) **Kraftbetätigtes Spannfutter.**

(30) Priorität: **06.08.85 DE 3528120**

(43) Veröffentlichungstag der Anmeldung:
**04.03.87 Patentblatt 87/10**

(45) Bekanntmachung des Hinweises auf die Patenterteilung:
**31.05.89 Patentblatt 89/22**

(84) Benannte Vertragsstaaten:
**AT DE FR GB IT SE**

(56) Entgegenhaltungen:
**DE-A-3 233 917**
**GB-A-2 130 929**

(73) Patentinhaber: **Paul Forkardt GmbH & Co. KG,
Rosenstrasse 44- 46, D-4000 Düsseldorf 30 (DE)**

(72) Erfinder: **Kempken, Rainer, Donaustrasse 3, D-4006
Erkrath (DE)**
Erfinder: **Stolzenberg, Hans, Bahnstrasse 2, D-4052
Korschenbroich 1 (DE)**

(74) Vertreter: **Patentanwälte Dipl.- Ing. Alex Stenger
Dipl.- Ing. Wolfram Watzke Dipl.- Ing. Heinz J.
Ring, Kaiser- Friedrich- Ring 70, D-4000 Düsseldorf
11 (DE)**

## Beschreibung

Die Erfindung betrifft ein kraftbetätigtes Spannfutter, insbesondere ein mit einer zentralen Durchgangsbohrung versehenes Hohlfutter für numerisch gesteuerte Drehmaschinen, mit mehreren in einem Futterkörper radial beweglich geführten Spannbacken, deren radiale Spannbewegung über ein im Futterkörper angeordnetes Getriebe durch eine axiale Bewegung eines Antriebsgliedes erzeugt wird und deren radiale Stellung im Verhältnis zur Ausgangsstellung des Antriebsgliedes vor dem Ausführen eines Spannhubes zur Verlagerung des Spannhubes innerhalb des Spannbereiches durch einen gleichzeitig auf sämtliche Spannbacken wirkenden Verstellantrieb verstellbar ist.

Kraftbetätigte Spannfutter der voranstehend beschriebenen Art sind aus den DE-OS-3 233 917 und 3 241 590 bekannt. Beide bekannten Konstruktionen benutzen zur radialen Einstellung der Spannbacken auf den jeweils gewünschten Spanndurchmesser eine Trennung der eigentlichen Spannbacke von der Treibbacke und die Anordnung einer Spindel zwischen diesen Backenteilen. Die Spindeln sämtlicher Spannbacken werden gleichzeitig durch einen Drehantrieb verstellt.

Der Nachteil der bekannten Konstruktionen ist darin zu sehen, daß die gesamte Spannkraft über die Spindeln und damit über eine Linienberührung im Gewinde übertragen werden muß. Außerdem verschließt der Drehantrieb die bei einer Vielzahl von Spannaufgaben benötigte zentrale Durchgangsbohrung des Spannfutters, so daß die bekannten Konstruktionen nicht zum Einsatz an Hohlfuttern geeignet sind. Schließlich erfordert die Betätigung der Verstellung den Einsatz eines Drehantriebes, der mit dem Spannfutter umlaufen muß. Hierdurch wird ein hoher technischer Aufwand erforderlich, der nicht nur teuer ist, sondern auch unpräzise arbeitet.

Der Erfindung liegt die Aufgabe zugrunde, bei einem kraftbetätigten Spannfutter der eingangs beschriebenen Art den Verstellantrieb zur Verlagerung des Spannhubes innerhalb des Spannbereiches derart auszubilden, daß eine radiale Verstellung auch ungeteilter Spannbacken bekannter Bauart mit geringem technischen Aufwand möglich ist, um eine hohe Spannkraft bei kurzem Spannhub und großer Wiederholgenauigkeit zu erzielen, wobei trotz der Verwendung eines separaten Verstellantriebes das Spannfutter mit einer Durchgangsbohrung versehen sein soll.

Die Lösung dieser Aufgabenstellung durch die Erfindung ist dadurch gekennzeichnet, daß das Antriebsglied durch eine zusätzliche Axialbewegung in eine außerhalb des Spannbereiches liegende Stellung überführbar ist, in der die Spannbacken vom Antriebsglied entkuppelt sind, und daß ein zusätzliches Verstellglied axial beweglich im Futterkörper angeordnet ist, das über jeweils ein Getriebe mit sämtlichen Spannbacken verbunden ist, bei einer Spannbewegung des Antriebsgliedes antriebslos mitgenommen wird und bei vom Antriebsglied entkuppelten Spannbacken zur Durchführung einer vorgegebenen radialen Verstellung der Spannbacken relativ zum Antriebsglied gesteuert betätigbar ist.

Mit diesem Vorschlag der Erfindung wird ein kraftbetätigtes Spannfutter geschaffen, bei dem trotz der Möglichkeit zur Verlagerung des Spannhubes innerhalb des Spannbereiches der bewährte Spannantrieb mit hoher Spannkraft und hoher Wiederholgenauigkeit beibehalten wird. Der Verstellantrieb wird mit Hilfe eines herkömmlichen Axialantriebes angetrieben, der problemlos an der rotierenden Spindel angebracht werden kann und eine präzise Axialverstellung ermöglicht. Die auch zur Herstellung von Hohlfuttern verwendbare Konstruktion überträgt die volle Spannkraft über ein bewährtes Spanngetriebe, ohne daß eine Teilung der Spannbacken erforderlich ist. Insgesamt ergibt sich somit mit dem erfindungsgemäßen Vorschlag ein Spannfutter, das auf bewährte Konstruktionselemente zurückgreift und mit geringem technischen Aufwand eine Verlagerung des jeweiligen Spannhubes innerhalb des vorgegebenen Spannbereiches ermöglicht.

Gemäß einem weiteren Merkmal der Erfindung ist das Getriebe zwischen den als Futterkolben ausgebildeten Antriebsglied und jeder Spannbacke als Keilstange mit mindestens einem Zahn ausgebildet, der in eine Verzahnung der Spannbacke eingreift. Alternativ kann gemäß der Erfindung das Getriebe zwischen dem Antriebsglied und jeder Spannbacke als im Futterkörper verschwenkbar gelagerter Hebel ausgebildet werden, der in eine von mehreren Aussparungen der Spannbacke eingreift.

Das Getriebe zwischen den Verstellglied und den Spannbacken ist bei einer bevorzugten Ausführungsform der Erfindung jeweils als Keilstange ausgebildet, es kann jedoch auch als im Futterkörper verschwenkbar gelagerter Hebel ausgeführt sein.

Mit der Erfindung wird schließlich vorgeschlagen, die Keilstange des Spannantriebes und die Keilstange des Verstellantriebes jeweils an gegenüberliegenden Seiten der Spannbacke angreifen zu lassen, so daß sich die Getriebeglieder für den Spannantrieb und den Verstellantrieb gleichmäßig im Futterkörper verteilen.

Auf der Zeichnung sind vier Ausführungsbeispiele eines erfindungsgemäßen Spannfutters dargestellt, und zwar zeigen:

Fig. 1    eine schematische Stirnansicht einer ersten Ausführungsform des Spannfutters,

Fig. 2    einen Längsschnitt gemäß der Schnittlinie II - II in Fig. 1 mit in der Arbeitsstellung befindlichem Spannantrieb,

Fig. 3  einen der Fig. 2 entsprechenden Längsschnitt mit einer Stellung des Spannantriebes, in der das Antriebsglied von den Spannbacken entkuppelt ist, um den Spannhub mittels des Verstellantriebes zu verstellen,

Fig. 4  einen Querschnitt gemäß der Schnittlinie IV - IV in Fig. 1,

Fig. 5  einen der Fig. 3 entsprechenden Längsschnitt durch eine zweite Ausführungsform,

Fig. 6  einen weiteren Längsschnitt gemäß der Fig. 3 durch eine dritte Ausführungsform,

Fig. 7  eine vierte Ausführungsform des Spannfutters in einem Längsschnitt gemäß Fig. 2 und

Fig. 8  einen der Fig. 7 entsprechenden Längsschnitt bei entkuppeltem Spannantrieb.

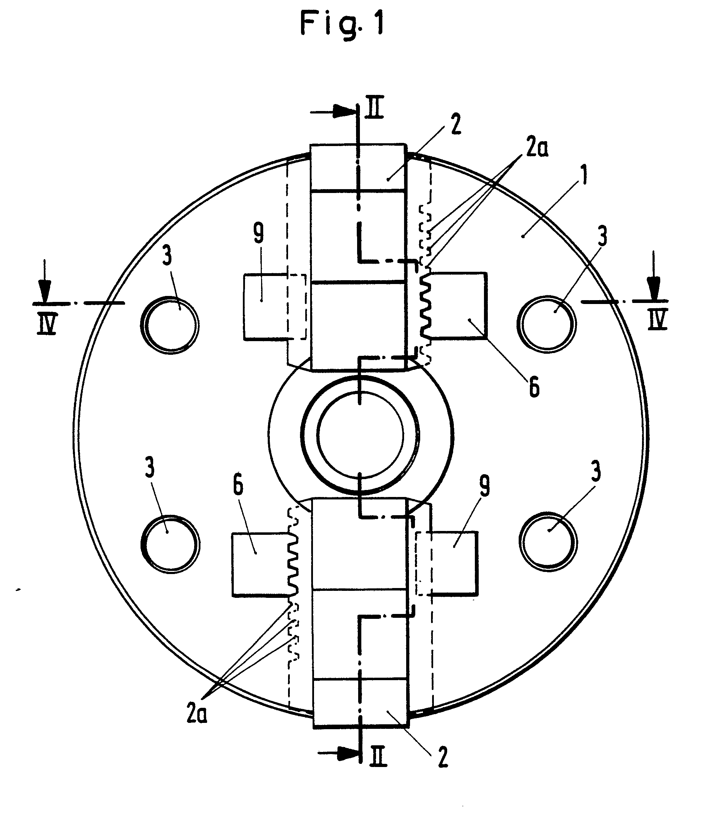

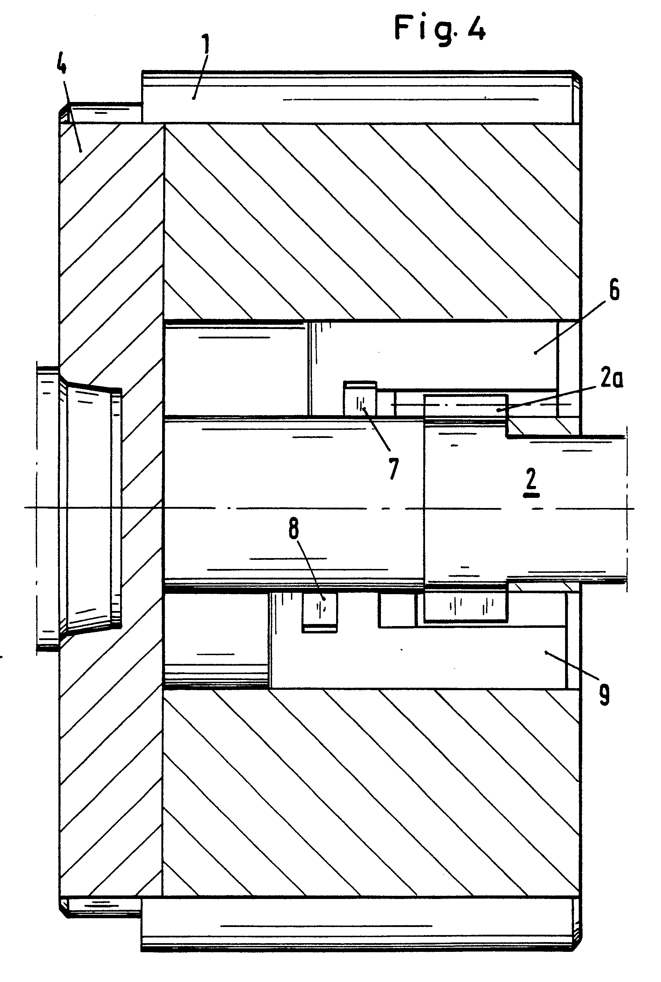

Das in den Figuren 1 bis 4 dargestellte erste Ausführungsbeispiel zeigt ein kraftbetätigtes Spannfutter mit einem Futterkörper 1, in dem beim Ausführungsbeispiel zwei Spannbacken 2 in radialer Richtung verschiebbar geführt sind. Selbstverständlich können im Futterkörper 1 anstelle von zwei auch drei oder mehr derartige Spannbacken angeordnet sein. Der Futterkörper 1 ist mittels mehrerer Schrauben 3 an einem Befestigungsring 4 befestigt, der seinerseits mittels Schrauben 5 an den Flansch einer nicht dargestellten Spindel einer Werkzeugmaschine angeschraubt wird.

Die mit gestuften Spannflächen versehenen Spannbacken 2 sind beim Ausführungsbeispiel nach den Figuren 1 bis 4 auf einer Seitenfläche mit einer Trapezverzahnung 2a versehen, in die eine entsprechende Verzahnung einer Keilstange 6 eingreift, die in axialer Richtung verschiebbar im Futterkörper 1 geführt ist. Die beiden Keilstangen 6 stehen über eine Aussparung am hinteren Ende mit einem Spannkolben 7 in Verbindung, der ebenfalls axial verstellbar im Futterkörper 1 geführt ist. Bei einer axialen Bewegung des Spannkolbens 7 und damit der Keilstangen 6 wird somit durch die zur Drehachse des Futterkörpers 1 geneigte Verzahnung zwischen Keilstange 6 und Spannbacke 2 eine radiale Verstellung der Spannbacken 2 bewirkt. Diese Spannbewegung wird durch einen vorzugsweise am hinteren Ende der nicht dargestellten Spindel angeordneten Antrieb, vorzugsweise einen Druckmittelzylinder, erzeugt. Das zur Umsetzung der axialen Bewegung in eine radiale Spannbewegung dienende Getriebe besteht beim Ausführungsbeispiel nach den Figuren 1 bis 4 aus dem Spannkolben 7 als Antriebsglied, den Keilstangen 6 und der zwischen jeder Keilstange 6 und der zugehörigen Spannbacke 2 ausgebildeten Trapezverzahnung 2a.

Da der Spannhub der Spannbacken 2 bei kraftbetätigten Spannfuttern normalerweise kleiner ist als der mit dem Spannfutter abzudeckende Spannbereich, soll die radiale Stellung der Spannbacken 2 in Verhältnis zur Ausgangsstellung des als Antriebsglied dienenden Spannkolbens 7 zur Verlagerung des Spannhubes verstellbar sein. Zu diesem Zweck ist im Futterkörper 1 neben dem Spannantrieb ein Verstellantrieb angeordnet. Dieser Verstellantrieb besteht beim ersten Ausführungsbeispiel aus einem als Verstellglied dienenden Verstellkolben 8, der an seinem vorderen Ende in das hintere Ende von zwei Keilstangen 9 eingreift. Diese Keilstangen 9 sind beim Ausführungsbeispiel mit einem schräg zur Drehachse des Futterkörpers 1 verlaufenden Vorsprung 9a versehen, der in der Art eines Zahnes in eine entsprechende schräge Aussparung eingreift, die in der der Trapezverzahnung 2a gegenüberliegenden Seite der Spannbacke 2 ausgebildet ist. Der Verstellantrieb besteht somit aus dem als Verstellglied dienenden Verstellkolben 8 und den mittels ihres Vorsprunges 9a in die Spannbacken 2 eingreifenden Keilstangen 9. Auch der Verstellkolben 8 ist mit einem Axialantrieb, vorzugsweise einem Druckmittelzylinder verbunden, der am hinteren Ende der nicht dargestellten Spindel der Werkzeugmaschine angeordnet ist.

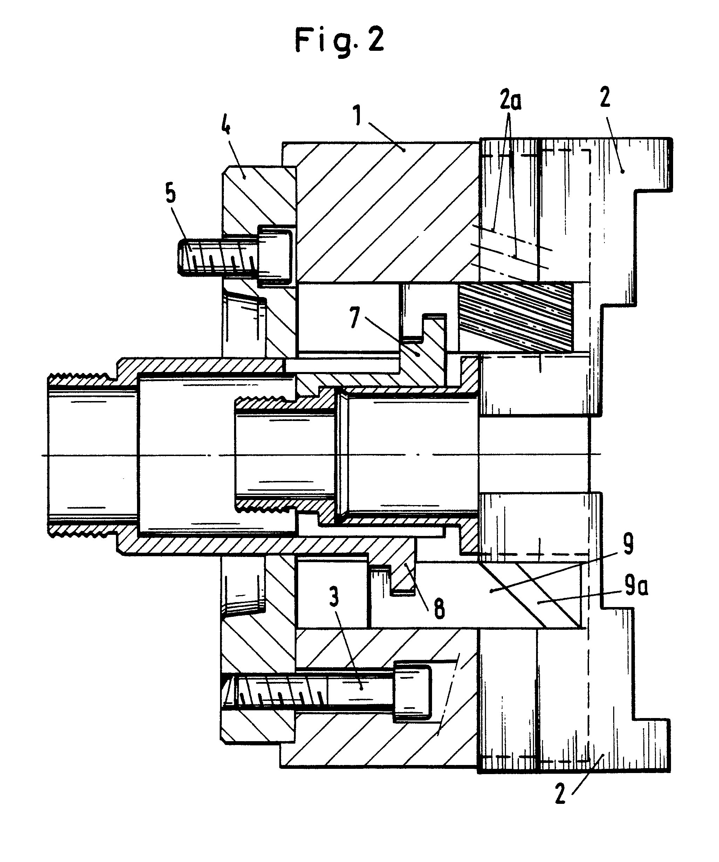

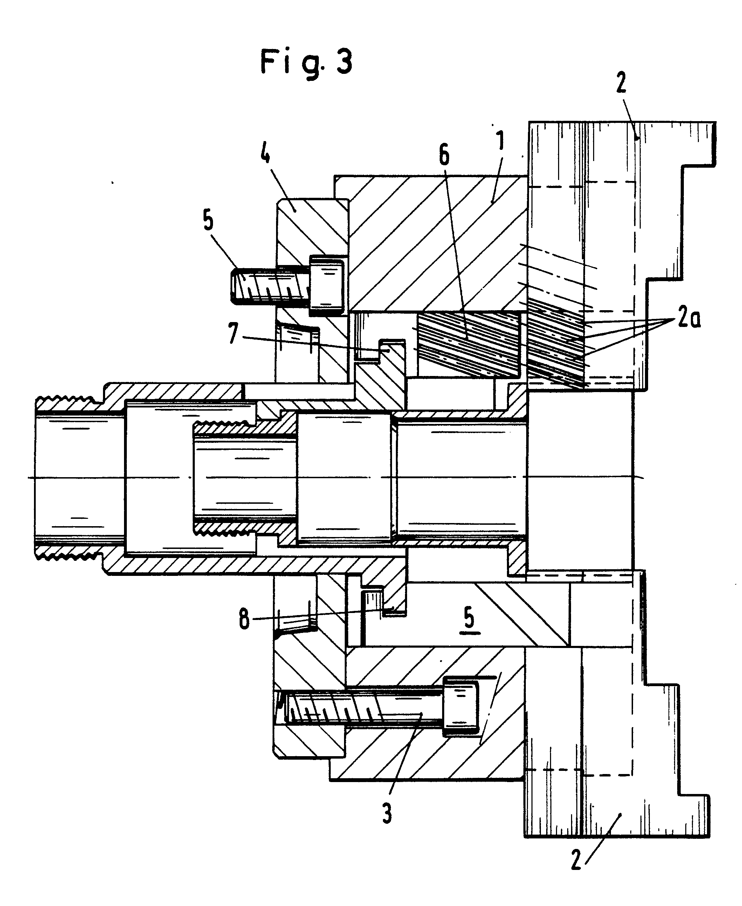

Um den Spannhub der Spannbacken 2 auf den Einspanndurchmesser des jeweils einzuspannenden Werkstückes einzustellen, wird der Spannkolben 7 durch eine zusätzliche Axialbewegung aus seiner Normalstellung gemäß Fig. 2 in eine außerhalb des Spannbereiches liegende Stellung überführt, wie dies in Fig. 3 eingezeichnet ist. Hierdurch tritt die Verzahnung der Keilstangen 6 außer Eingriff mit den Trapezverzahnungen 2a der Spannbacken 2. Durch eine axiale Bewegung des Verstellkolbens 8 können die Spannbacken 2 somit in radialer Richtung verstellt werden, da die axiale Bewegung der Keilstangen 9 aufgrund des schrägen Verlaufes des in die Spannbacke 2 eingreifenden Vorsprunges 9a eine radiale Verstellbewegung der Spannbacken 2 zur Folge hat. Nachdem die Spannbacken 2 mit Hilfe des voranstehend beschriebenen Verstellantriebes die gewünschte Ausgangsstellung für den auszuführenden Spannhub eingenommen haben, werden die Keilstangen 6 des Spannantriebes durch eine Axialbewegung des Spannkolbens 7 wieder mit den Trapezverzahnungen 2a der Spannbacken 2 in Eingriff gebracht.

Nunmehr kann der gewünschte Spannhub ausgeführt werden, wobei die Keilstangen 9 und damit der Verstellkolben 8 über die Spannbacken 2 antriebslos mitgenommen werden. Zu diesem Zweck ist bei der Durchführung des Spannhubes der Antrieb des Verstellkolbens 8 ausgeschaltet bzw. wirkungslos gemacht.

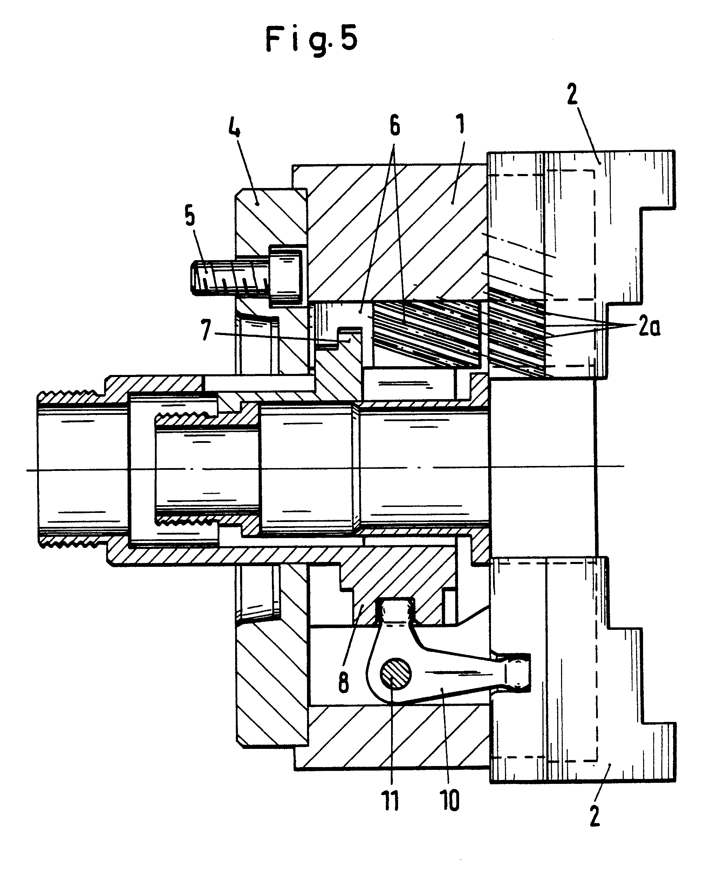

Beim zweiten Ausführungsbeispiel nach Fig. 5 entspricht der Spannantrieb dem des ersten Ausführungsbeispiels. Der Verstellantrieb ist jedoch anders ausgeführt. Er umfaßt als Verstellglied wiederum einen Verstellkolben 8, der mit einem Arm eines zweiarmigen Hebels 10 zusammenwirkt, welcher auf einem Bolzen 11 verschwenkbar im Futterkörper 1 gelagert ist. Der andere Arm des Hebels 10 greift in eine Aussparung ein, die in der Rückseite der zugehörigen Spannbacke 2 ausgebildet ist, wie dies die untere Hälfte der Fig. 5 zeigt.

Auch beim Ausführungsbeispiel nach Fig. 5 läuft der Verstellantrieb leer mit, wenn der Spannantrieb betätigt wird. Sind die Spannbacken 2 jedoch vom zugehörigen Antriebsglied 7 entkuppelt, indem dieses durch eine Zusatzbewegung die Verzahnungen von Keilstange 6 und Spannbacke 2 außer Eingriff gebracht hat, kann eine radiale Einstellung der Spannbacken 2 auf den jeweils gewünschten Spanndurchmesser über den Verstellantrieb erfolgen. Eine axiale Bewegung des Verstellkolbens 8 hat hierbei mit Hilfe des Hebels 10 eine radiale Verstellbewegung der Spannbacken 2 zur Folge.

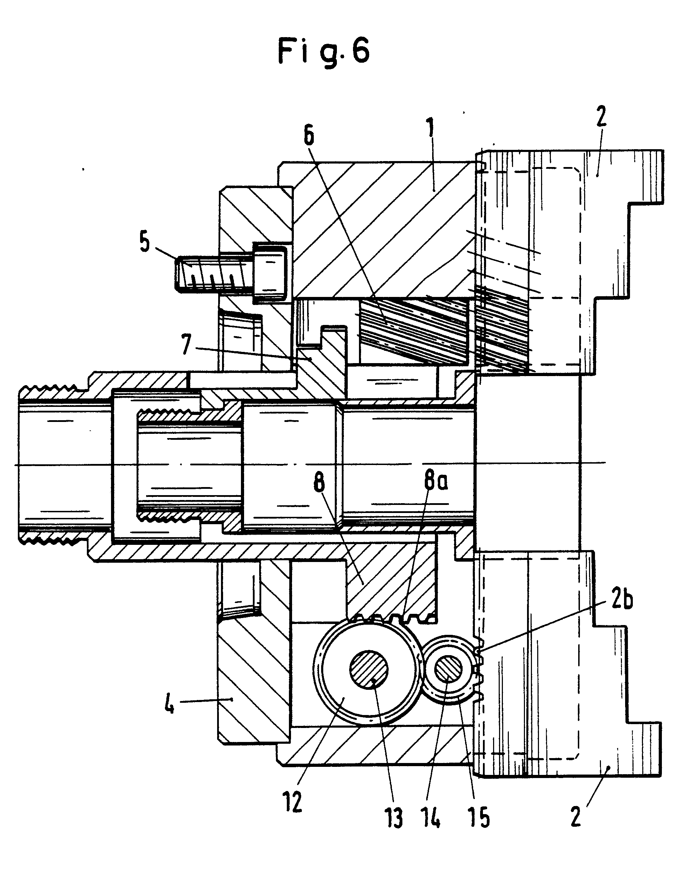

Auch bei der dritten Ausführungsmöglichkeit nach Fig. 6 wird für den Spannantrieb des dargestellten Spannfutters ein Keilstangenantrieb mit trapezverzahnten Keilstangen 6 verwendet, die von einem Spannkolben 7 als Antriebsglied betätigt werden. Der Verstellantrieb besteht bei dieser dritten Ausführungsform wiederum aus einem Verstellkolben 8, der mit einer Verzahnung 8a versehen ist, die in ein Zahnrad 12 eingreift, das auf einer Achse 13 frei drehbar im Futterkörper 1 gelagert ist. Mit diesem Zahnrad 12 kämmt ein auf einer Achse 14 frei drehbar gelagertes weiteres Zahnrad 15, das wiederum in eine Verzahnung 2b eingreift, die auf der Rückseite der zugehörigen Spannbacke 2 in der Art einer Zahnstange ausgeführt ist.

Auch bei dieser Ausbildung des Verstellantriebes hat somit eine axiale Bewegung des Verstellkolbens 8 eine radiale Verstellbewegung der Spannbacken 2 zur Folge. Die Verstellbewegungen der Spannbacken 2 erfolgen bei allen Ausführungsformen des Verstellantriebes synchron, da die zugehörigen Getriebe gemeinsam vom Verstellkolben 8 betätigt werden.

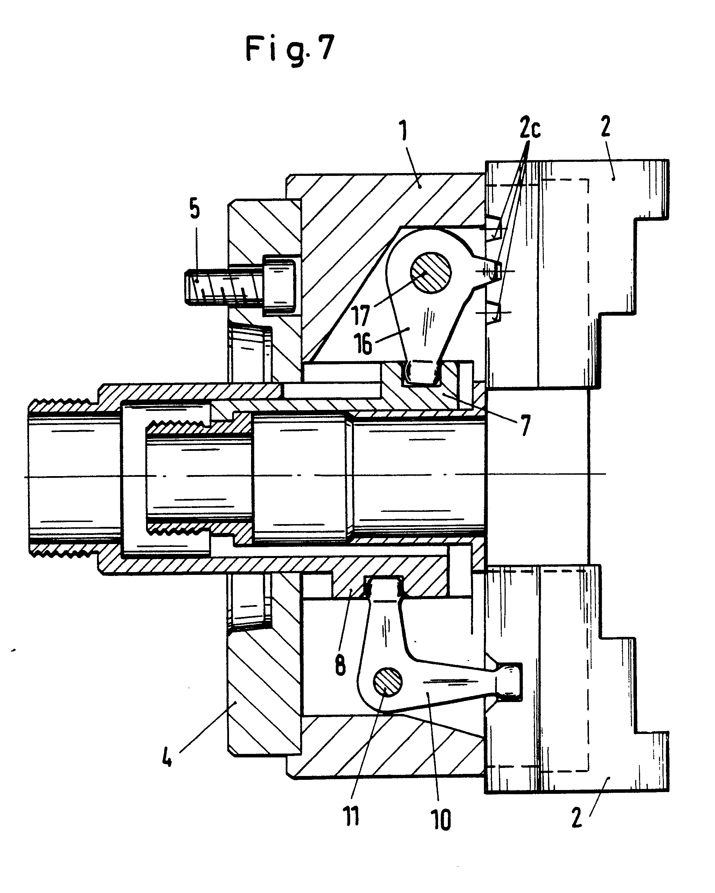

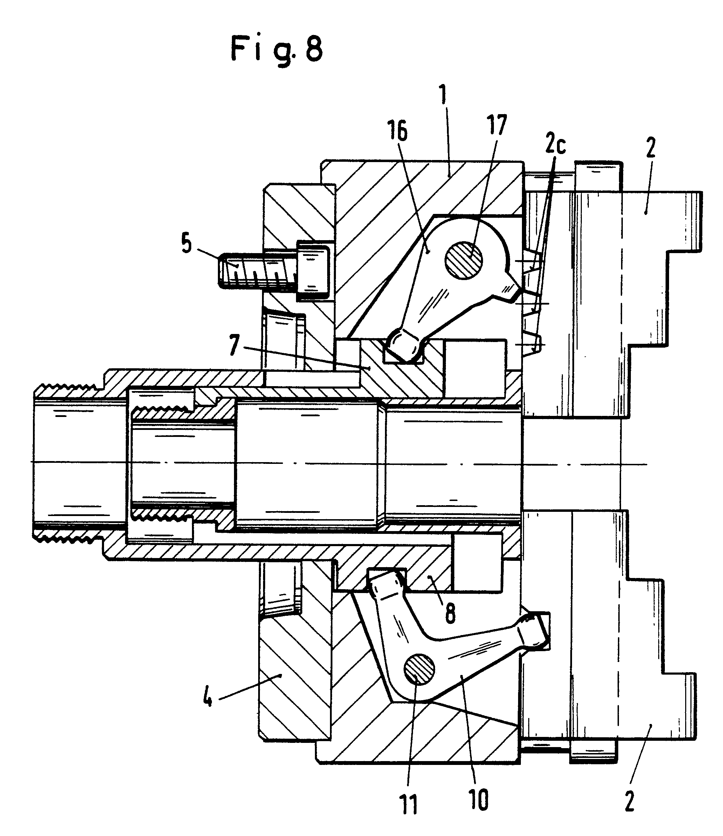

Die Figuren 7 und 8 zeigen schließlich eine vierte Ausführungsmöglichkeit. Hierbei werden als Verstellantrieb Hebel 10 verwendet, die gemäß der Ausführung nach Fig. 5 auf Bolzen 11 verschwenkbar im Futterkörper 1 gelagert sind und vom Verstellkolben 8 betätigt werden.

Bei dieser vierten Ausführungsform umfaßt auch das Getriebe des Spannantriebes für jede Spannbacke 2 einen Hebel 16, der auf einer Achse 17 im Futterkörper 1 verschwenkbar gelagert ist. Dieser Hebel 16 steht mit seinem längeren Arm mit dem Spannkolben 7 in Eingriff. Mit seinem kürzeren Arm greift jeder Hebel 10 in eine von mehreren Aussparungen 2c, die in der Rückseite der Spannbacken 2 ausgebildet sind. Durch eine Zusatzbewegung des Spannkolbens 7 nach hinten tritt der kürzere Arm des Hebels 16 gemäß Fig. 8 aus derjenigen Aussparung 2c aus, in der er sich bei der letzten Einstellung befunden hatte. Nunmehr können die Spannbacken 2 gemeinsam über den in der unteren Hälfte der Figuren 7 und 8 dargestellten Verstellantrieb hinsichtlich ihrer radialen Lage verstellt werden. Beim Ausführungsbeispiel sind drei Aussparungen 2c in jeder Spannbacke 2 vorgesehen, so daß es drei mögliche Ausgangsstellungen der Spannbacken 2 gibt. Sobald die Spannbacken 2 die gewünschte Stellung erreicht haben, wird der Spannantrieb in den Spannbereich zurückgeführt. Hierdurch tritt der kürzere Arm der Hebel 16 in die jeweils vor ihm liegende Aussparung 2c der Spannbacke 2 ein. Unter Mitnahme des leer mitlaufenden Verstellantriebes kann nunmehr die jeweils erforderliche Spannaufgabe durchgeführt werden.

## Bezugsziffernliste:

| 1 | Futterkörper |
|---|---|
| 2 | Spannbacke |
| 2a | Trapezverzahnung |
| 2b | Verzahnung |
| 2c | Aussparung |
| 3 | Schraube |
| 4 | Befestigungsring |
| 5 | Schraube |
| 6 | Keilstange |
| 7 | Spannkolben |
| 8 | Verstellkolben |
| 8a | Verzahnung |
| 9 | Keilstange |
| 9a | Vorsprung |
| 10 | Hebel |
| 11 | Bolzen |
| 12 | Zahnrad |
| 13 | Achse |
| 14 | Achse |
| 15 | Zahnrad |
| 16 | Hebel |
| 17 | Achse |

## Patentansprüche

1. Kraftbetätigtes Spannfutter, insbesondere mit einer zentralen Durchgangsbohrung versehenes Hohlfutter für numerisch gesteuerte Drehmaschinen, mit mehreren in einem Futterkörper (1) radial beweglich geführten Spannbacken (2), deren radiale Spannbewegung über ein im Futterkörper angeordnetes Getriebe (2a, 6, 7) durch eine axiale Bewegung eines Antriebsgliedes erzeugt wird und deren radiale Stellung im Verhältnis zur Ausgangsstellung des Antriebsgliedes vor dem Ausführen eines Spannhubes zur Verlagerung des Spannhubes innerhalb des Spannbereiches durch einen gleichzeitig auf sämtliche Spannbacken wirkenden Verstellantrieb (8, 9) verstellbar ist,

dadurch gekennzeichnet,

daß das Antriebsglied durch eine zusätzliche Axialbewegung in eine außerhalb des Spannbereiches liegende Stellung überführbar ist, in der die Spannbacken (2) vom Antriebsglied entkuppelt sind, und daß ein zusätzliches Verstellglied axial beweglich im Futterkörper (1) angeordnet ist, das über jeweils ein Getriebe mit sämtlichen Spannbacken (2) verbunden ist, bei einer Spannbewegung des Antriebsgliedes antriebslos mitgenommen wird und bei vom Antriebsglied entkuppelten Spannbacken (2) zur Durchführung einer vorgegebenen radialen Verstellung der Spannbacken (2) relativ zum Antriebsglied (7) gesteuert betätigbar ist.

2. Spannfutter nach Anspruch 1, dadurch gekennzeichnet, daß das Getriebe zwischen dem als Spannkolben (7) ausgebildeten Antriebsglied und jeder Spannbacke (2) als Keilstange (6) mit mindestens einem Zahn ausgebildet ist, der in eine Verzahnung (2a) der Spannbacke (2) eingreift.

3. Spannfutter nach Anspruch 1, dadurch gekennzeichnet, daß das Getriebe zwischen dem Antriebsglied und jeder Spannbacke (2) als im Futterkörper (1) verschwenkbar gelagerter Hebel (16) ausgebildet ist, der in eine von mehreren Aussparungen (2c) der Spannbacke (2) eingreift.

4. Spannfutter nach mindestens einem der Ansprüche 1 bis 3, dadurch gekennzeichnet, daß das Getriebe zwischen dem Verstellglied und den Spannbacken (2) jeweils als Keilstange (9) ausgebildet ist.

5. Spannfutter nach mindestens einem der Ansprüche 1 bis 3, dadurch gekennzeichnet, daß das Getriebe zwischen dem Verstellglied und den Spannbacken (2) jeweils als im Futterkörper (1) verschwenkbar gelagerter Hebel (10) ausgebildet ist.

6. Spannfutter nach den Ansprüchen 2 und 4, dadurch gekennzeichnet, daß die Keilstange (6) des Spannantriebes und die Keilstange (9) des Verstellantriebes jeweils an gegenüberliegenden Seiten der Spannbacke (2) angreifen.

## Claims

1. Power-operated chuck, more particularly a hollow chuck with a central through bore for digitally-controlled lathes, having a plurality of gripping jaws (2) set in a chuck body (1) so as to be radially movable, the radial gripping motion of said jaws being produced by an axial movement of a driving member via a gear arrangement (20, 6, 7) disposed in the chuck body, and the radial position of said jaws in relation to the starting position of the driving member being adjustable by an adjusting drive (8, 9) acting simultaneously on all the jaws to shift the chucking stroke within the chucking range before execution of a clamping stroke, characterised in that the driving member can be transferred by an additional axial movement to a position situated outside the chucking range in which the gripping jaws (2) are uncoupled from the driving member, and in that an additional adjusting member is arranged to be axially movable in the chuck body (1), which is connected by a respective gear arrangement to all the gripping jaws (2), is entrained without being driven whenever the driving member executes a chucking movement, and when the gripping jaws (2) are uncoupled from the driving member can be controlledly actuated to perform a pre-determined radial adjustment of the gripping jaws (2) relative to the driving member.

2. Power-operated chuck according to claim 1, characterised in that the gear arrangement between the driving member in the form of a chucking piston (7) and each gripping jaw (2) is a splined rack (6) with at least one tooth which meshes in toothing (2a) on the jaw (2).

3. Power-operated chuck according to claim 1, characterised in that the gear arrangement between the driving member and each gripping jaw (2) is a lever (16) swivel-mounted in the chuck body (1) and engaging in one of a plurality of recesses (2c) in the jaw (2).

4. Power-operated chuck according to one of claims 1 to 3, characterised in that the gear arrangement between the adjusting member and the gripping jaws (2) is in each case a splined rack (9).

5. Power-operated chuck according to at least one of claims 1 to 3, characterized in that the gear arrangement between the adjusting member and the gripping jaws (2) is in each case a lever (10) swivel-mounted in the chuck body (1).

6. Power-operated chuck according to claims 2 and 4, characterized in that the splined rack (6) of the chucking drive and the splined rack (9) of the adjusting drive in each case act on opposite sides of the gripping jaw (2).

## Revendications

1. Manchon de serrage mécanique, en particulier avec un manchon creux pourvu d'un alésage traversant central pour des tours commandés numériquement, avec plusieurs mâchoires de serrage guidées mobiles radialement dans un corps de mandrin, et dont le mouvement de serrage radial est réalisé par l'intermédiaire d'un mécanisme (2a, 6, 7) placé dans le corps de mandrin grâce à un déplacement axial d'un organe d'entraînement et dont la position radiale peut être réglée par un dispositif d'entraînement (8, 9) de réglage agissant simultanément sur toutes les mâchoires de serrage en fonction de la position initiale de l'organe d'entraînement avant l'exécution d'une course de serrage pour déplacer celle-ci à l'intérieur de la zone de serrage, caractérisé en ce que l'organe d'entraînement peut être transféré par un déplacement axial additionnel dans une position se trouvant à l'extérieur de la zone de serrage et dans laquelle les mâchoires de serrage (2) sont découplées de l'organe d'entraînement, et en ce qu'est placé mobile axialement dans le corps de mandrin (1) un organe de réglage supplémentaire, qui est relié à chacune des mâchoires (2) par l'intermédiaire d'un mécanisme, lors d'un déplacement de serrage de l'organe d'entraînement est déplacé sans entraînement et peut être actionné par commande pour l'exécution d'un réglage radial prédéterminé des mâchoires de serrage (2) relativement à l'organe d'entraînement, lorsque les mâchoires de serrage (2) sont découplées de l'organe d'entraînement.

2. Manchon de serrage selon la revendication 1, caractérisé en ce que le mécanisme entre l'organe d'entraînement formé d'un piston de serrage (7) et chaque mâchoire de serrage (2) est formé d'une barre cannelée (6) avec au moins une dent, qui vient en prise avec une denture (2a) de la mâchoire de serrage (2).

3. Mandrin de serrage selon la revendication 1, caractérisé en ce que le mécanisme entre l'organe d'entraînement et chaque mâchoire de serrage (2) est formé d'un levier (16) supporté pivotant dans le corps du mandrin (1) et qui vient en prise dans un évidement (2c) d'une pluralité d'évidements de la mâchoire de serrage (2).

4. Mandrin de serrage selon au moins l'une des revendications 1 à 3, caractérisé en ce que le mécanisme entre l'organe de réglage et les mâchoires de serrage (2) est formé d'une barre cannelée (9).

5. Mandrin de serrage selon au moins l'une des revendications 1 à 3, caractérisé en ce que le mécanisme entre l'organe de réglage et les mâchoires de serrage (2) est formé respectivement d'un levier (10) supporté pivotant dans le corps de mandrin (1).

6. Mandrin de serrage selon les revendications 2 à 4, caractérisé en ce que la barre cannelée (6) du dispositif d'entraînement de serrage et la barre cannelée (9) du dispositif d'entraînement de réglage viennent en prise respectivement sur des faces en vis à vis de la mâchoire de serrage (2).

# Fig. 1

# Fig. 2

# Fig. 3

## Fig. 4

# Fig. 5

# Fig.6

# Fig. 7

# Fig. 8